(19) Europäisches Patentamt
European Patent Office
Office européen des brevets

(11) Veröffentlichungsnummer : **0 214 454**
**B1**

(12) **EUROPÄISCHE PATENTSCHRIFT**

(45) Veröffentlichungstag der Patentschrift : **05.04.89**

(51) Int. Cl.[4] : **C 08 F220/56**, C 08 F226/02, C 08 F220/06, C 04 B 24/26

(21) Anmeldenummer : **86110675.5**

(22) Anmeldetag : **01.08.86**

(54) **Wasserlösliche Copolymerisate und deren Verwendung als Baustoffhilfsmittel.**

(30) Priorität : **14.08.85 DE 3529095**

(43) Veröffentlichungstag der Anmeldung : **18.03.87 Patentblatt 87/12**

(45) Bekanntmachung des Hinweises auf die Patenterteilung : **05.04.89 Patentblatt 89/14**

(84) Benannte Vertragsstaaten : **AT DE FR IT NL**

(56) Entgegenhaltungen : **EP–A– 0 044 508**

(73) Patentinhaber : **Wolff Walsrode Aktiengesellschaft**
**Postfach**
**D-3030 Walsrode 1 (DE)**

(72) Erfinder : **Lange, Werner, Dr.**
**Im Heidfeld 18**
**D-2722 Visselhövede (DE)**
Erfinder : **Höhl, Frank**
**Brochdorf 52**
**D-3044 Neuenkirchen (DE)**
Erfinder : **Szablikowski, Klaus, Dr.**
**Claudiusstrasse 5**
**D-3030 Walsrode 1 (DE)**

(74) Vertreter : **Zobel, Manfred, Dr. et al**
**c/o BAYER AG Konzernverwaltung RP Patentabteilung Bayerwerk**
**D-5090 Leverkusen (DE)**

**EP 0 214 454 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft neue wasserlösliche Copolymerisate auf Basis von Acrylsäurederivaten und deren Verwendung als Baustoffhilfsmittel.

Das Verlegen von Nutzfußboden, z. B. Holzparkett, Fliesen oder Kunststoff-Fußbodenbelägen, kann nur auf horizontalen und absolut ebenen Fußboden-Oberflächen erfolgen. Bei der Erstellung von Gebäuden werden im Rohbau jedoch nur unebene Betonoberflächen erhalten, so daß aus diesem Grund üblicherweise auf diese unebenen Betondecken zunächst ein Estrich aufgebracht werden muß.

Während früher zur Herstellung der erforderlichen horizontalen und ebenen Oberflächen Estriche aus Gußasphalt, Zement oder Magnesit verwendet wurden, deren Aufbringen, Nivellieren und Glätten einen beträchtlichen Arbeitsaufwand mit sich brachte, sind seit einiger Zeit auch Mörtelmischungen bekannt, die nach Zugabe von Wasser eine fließ- und pumpfähige Konsistenz aufweisen und sich unter dem Einfluß der Schwerkraft wie eine Flüssigkeit auf den unebenen Fußboden selbst nivellieren und glätten.

So ist aus der DE-OS 1 943 634 eine Mörtelmasse bekannt, die aus Anhydrit, gegebenenfalls Sand, einem Anreger, einem mit Sulfit oder Sulfonsäure modifiziertem Harz auf der Basis eines Amino-S-triazins mit mindestens 2 $NH_2$-Gruppen als festigkeitserhöhendem Zusatz, einem Netzmittel und gegebenenfalls einem Entschäumer besteht. Es handelt sich hierbei um Melaminformaldehydkondensationsprodukte, die als Betonverflüssiger zugesetzt werden. Durch die Betonverflüssigung soll eine möglichst leicht pumpfähige Betonmischung erhalten werden, die extrem gut verfließt und möglichst schnell aushärtet.

Nachteilig bei diesen Produkten auf Melaminformaldehyd-basis ist, daß ihre Verflüssigung nur $\approx$ 15 min anhält.

Hierzu kommt noch, daß die Anforderungen an ein Verfließmittel in einem selbstnivellierenden Fließestrich grundsätzlich anders sind als diejenigen an einen Betonverflüssiger. So ist bei einem Verfließmittel für selbstnivellierenden Fließestrich ein völlig homogenes Verfließen der Estrichmasse erforderlich. Insbesondere darf beim Verfließen kein Sedimentieren der schwereren Bestandteile auftreten. Das Verfließhilfsmittel für Betonestrich muß somit eine gewisse Tragfähigkeit für die Baustoffmischung aufweisen. Da es auf der Baustelle beim Aufbringen des Fließestrichs durchaus zu Verzögerungen kommen kann, ist es notwendig, daß das Fließestrichhilfsmitel auch noch 1 Stunde nach dem Zusatz zur Baustoffmischung seine volle Wirksamkeit behält.

Bei Hilfsmitteln auf Basis von Melaminformaldehydkondensationsprodukten tritt jedoch beim Verfließen eine Sedimentation der schwereren Bestandteile auf. Außerdem ist es nicht möglich, die Fließestrichmischung nach 1 Stunde durch Rühren wieder in einen einwandfrei fließfähigen Zustand zu bringen, so daß ein homogenes Verfließen erreicht wird. Man hat auch versucht, durch Zusatzmittel die Tragfähigkeit zu verbessern. Dies gelingt jedoch nur unvollkommen.

Überraschenderweise gelingt es nun, mit den erfindungsgemäßen Polymerisaten Verfließhilfsmittel für Baustoffmischungen bereitzustellen, die bereits in niedrigen Mengen zugesetzt, das gewünschte homogene Verfließen von Baustoffmischungen zu Estrichen mit absolut ebener Oberfläche bewirken. Es ist hierbei nicht notwendig, irgendwelche Hilfs- und Zusatzstoffe zuzusetzen, um das homogene Fließen zu erreichen. Besonders vorteilhaft bei diesen erfindungsgemäßen Polymerisaten ist, daß ihre volle Wirksamkeit auch noch 1 Stunde nach Zugabe zur Baustoffmischung erhalten ist.

Gegenstand der Erfindung sind daher wasserlösliche Copolymerisate, die zu

1) 5 bis 50 Mol-%, vorzugsweise 10 bis 40 Mol-% aus Resten der Formel I

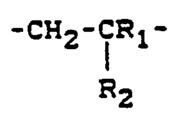

2) 0 bis 20 mol-%, vorzugsweise 0 bis 15 mol-% Resten der Formel II

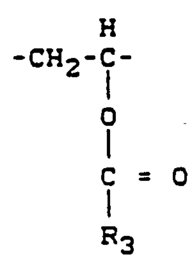

3) 5 bis 50 mol-%, vorzugsweise 20 bis 50 mol-% Resten der Formel III

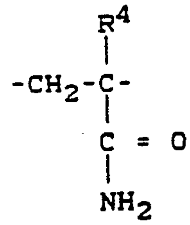

4) 5 bis 50 mol-%, vorzugsweise 10 bis 40 mol-% Resten der Formel IVa oder IVb

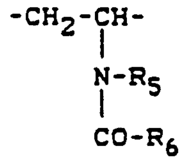

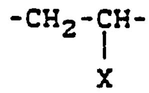

(IVa) (IVb)

5) 2 bis 50 mol-%, vorzugsweise 5 bis 30 mol-% Resten der Formel V

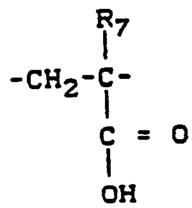

6) 5 bis 50 mol-%, vorzugsweise 5 bis 30 mol-% Resten der Formel VI

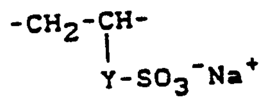

bestehen, wobei die Summe aus 1) bis 6) immer 100 mol-%, ergeben muß und deren Verwendung als Baustoff-Hilfsmittel, insbesondere als Verfließhilfsmittel, in selbstnivellierenden Estrichmischungen und Fußbodenausgleichsmassen.

In den Resten I bis VI der statistisch aufgebauten Polymerisaten bedeuten :

$R_1$ Wasserstoff oder eine Methylgruppe,

$R_2$ eine Alkoxycarbonylgruppe mit 1 bis 4 C-Atomen in der Alkoxygruppe, vorzugsweise eine Ethyloxy-, Isobutyloxy- oder tert.-Butyloxycarbonylgruppe, eine Alkanoyloxygruppe mit 1 bis 4 C-Atomen oder eine β-Hydroxyalkoxycarbonyl mit 2 oder 3 C-Atomen,

$R_3$ eine Methyl- oder eine Ethylgruppe,

$R_4$ Wasserstoff oder eine Methylgruppe,

$R_5$ und $R_6$ gleich oder verschieden, Wasserstoff, eine Methyl-, Ethylgruppe oder können gemeinsam einen Trimethylen- oder Pentamethylenring bilden,

$R_7$ Wasserstoff oder eine Methylgruppe,

und

Y eine kovalente Bindung oder eine Gruppe der Formel

$—CO—NH—C(CH_3)_2—CH_2—$,

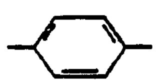

und

X ein Imidazol- oder Carbazolrest.

Vorzugsweise können die erfindungsgemäßen Polymerisate noch mit niederen, aliphatischen

Aldehyden, vorzugsweise Formaldehyd und Natriumhydrogensulfit umgesetzt werden, wobei 0,1 bis 1 Mol, vorzugsweise 0,4 bis 0,8 Mol/pro Mol der Reste der Formel III an Aldehyd zugesetzt werden. Das Natriumhydrogensulfit wird vorzugsweise äquimolar zum Aldehyd eingesetzt.

Besonders bevorzugt sind Copolymerisate, die sich von Ethylacrylat, Vinylacetat, Acrylamid, 1-Vinylpyrrolidon-2, Acrylsäure und 2-Acrylamido-2-methylpropansulfonsäure ableiten, sowie Umsetzungsprodukte dieser Copolymerisate mit Formaldehyd und Natriumhydrogensulfit.

Diese ausgezeichnete Wirksamkeit der erfindungsgemäßen Copolymerisate als Verfließhilfsmittel in Baustoffmischungen war völlig überraschend, da ähnlich aufgebaute Copolymerisate aus z. B. Acrylamid, AMPS und Vinylpyrrolidon völlig ungeeignet sind.

Die erfindungsgemäßen Polymerisate können in an sich bekannter Weise z. B. durch eine radikalische Polymerisation in wäßriger Lösung hergestellt werden.

Dabei wird die Polymerisation wie üblich in einer Schutzgasatmosphäre, vorzugsweise unter Stickstoff, durchgeführt. Die Polymerisationstemperatur soll zwischen 20 und 100 °C, vorzugsweise zwischen 30 und 60 °C, liegen.

Die Polymerisation kann durch die üblichen Polymerisationsinitiatoren gestartet werden, z. B. $K_2S_2O_8$, $H_2O_2$, $(NH_4)_2S_2O_8$, $H_2O_2$/Isoascorbinsäuregemisch. Pro 100 g Monomere werden in der Regel 1 bis 10 g Polymerisationsinitiator eingesetzt.

Zur Durchführung der Polymerisation werden die Monomeren vorzugsweise mit einer Konzentration im Bereich von 20 bis 40 Gew.-% an Gesamtmonomeren in Wasser gelöst. Zur besseren Verteilung der nicht wasserlöslichen Monomeren kann ein Tensid zugesetzt werden. Da es das Ziel ist, möglichst kurzkettige Polymerisate zu erhalten, werden relativ große Mengen eines Kettenlängenreglers eingesetzt. Hierzu können Hydrochinon, Isopropanol oder weitere geeignete Kettenlängenregler verwendet erden. Nach einer Stickstoffspülung wird die Reaktion gestartet. Die Copolymerisate können auch vorteilhaft mit Formaldehyd und Natriumhydrogensulfit umgesetzt werden, um den Anteil an Sulfonsäuregruppen im Fertigprodukt zu erhöhen.

Aus der wäßrigen Lösung kann das erfindungsgemäße Copolymerisat durch Abdestillieren des Wassers oder Ausfällen durch Mischen der Lösung mit einem wassermischbaren organischen Lösungsmittel, wie Methanol, Ethanol, Aceton oder dergleichen isoliert werden. Vorzugsweise wird jedoch die wäßrige Lösung des Reaktionsprodukts direkt, evtl. nach Einstellen einer gewünschten Konzentration, als Verfließhilfsmittel für Estrichmischungen eingesetzt.

Die erfindungsgemäßen Copolymerisate sind hervorragend geeignet als Hilfsmittel für Baustoffmischungen. Sie bewirken ein homogenes, gleichmäßiges Verfließen von Estrichmischungen zu einer völlig ebenen, glatten Oberfläche. Besonders vorteilhaft ist, daß diese erfindungsgemäßen Copolymerisate ihre Wirksamkeit auch noch nach 1 Stunde nach Zugabe des Polymerisats zur Baustoffmischung voll beibehalten. Es steht somit ein hervorragendes Verfließmittel für den Einsatz in Estrichmischungen und Fußbodenausgleichsmassen zur Verfügung.

Ein weiterer Gegenstand der Erfindung sind daher Baustoffmischungen, insbesondere Estrichmischungen, auf Basis Zement, Sand und Flugasche, die dadurch gekennzeichnet sind, daß sie als Verfließhilfsmittel die erfindungsgemäßen Copolymerisate enthalten.

Üblicherweise werden zur Formulierung von Fließestrichmischungen des Verfließhilfsmittels, wie z. B. das bekannte Hilfsmittel auf Melaminformaldehydkondensationsproduktbasis in Mengen von 0,4 bis 0,8 Gew.-%, bezogen auf den eingesetzten Feststoff, eingesetzt. Mit den erfindungsgemäßen Copolymerisaten ist es jedoch möglich, schon bei einer Einsatzmenge von nur 50 % der bisher üblichen Mengen ein hervorragendes Verfließen von Estrichmischungen zu erreichen. Das erfindungsgemäße Verfließhilfsmittel zeigt daher schon seine volle Wirksamkeit in Mengen von 0,05 bis 1 Gew.-%, vorzugsweise 0,15 bis 0,4 Gew.-%, bezogen auf Feststoffe. Die Estrichmischungen sind vorzugsweise auf Basis von Zement, Sand und Flugasche.

## Beispiel 1

In einem 1 l-Polymerisationskolben mit Rührer, Rückflußkühler und Gaseinleitrohr für Inertgas werden 329 g entionisiertes Wasser vorgelegt. Danach werden 22,58 g Ethylacrylat zugegeben. Diese Menge entspricht 0,2256 mol Ethylacrylat.

Anschließend werden

9,06 g Vinylacetat = 0,1053 mol und
128,3 g 30 %ige wäßrige Acrylamidlösung = 0,5414 mol und
40,07 g 1-Vinylpyrrolidon-2 = 0,3610 mol und
8,67 g Acrylsäure = 0,1203 mol und
62,26 g 50 %ige Lösung von 2-Acrylamido-2-methylpropannatriumsulfonat (AMPS) zugegeben.

Diese Monomereinsatzmengen entsprechen einer Zusammensetzung von

15 mol-% Ethylacrylat,
7 mol-% Vinylacetat,

36 mol-% Acrylamid,
24 mol-% 1-Vinylpyrrolidon-2,
8 mol-% Acrylsäure und
10 mol-% AMPS.

Als Kettenlängenregler wird Hyddrochinon in einer Menge von 6 g in Form einer 1 %iger Lösung ≈ 0,04 %, bezogen auf die Gesamtmonomereinwaage, eingesetzt. Um eine bessere Verteilung der nicht wasserlöslichen Monomeren zu erreichen, wird eine Lösung des anionischen Tensids Alkyldiglykolethersulfat-natriumsalz auf Basis nativer Fettalkohole $R—O—(CH_2—CH_2—O)_2—SO_2Na$ Alkyl = 75-70 % $C_{12}$ 25-30 % $C_{14}$ (Genopol LRO® flüssig) in einer Menge von 3,16 g, in Form einer 1 %ige Lösung = 0,1 % auf die Summe aus Vinylacetat und Ethylacrylateinwaage zugegeben.

Nach dem Ende der Zugaben wird mit einer Geschwindigkeit von 350 bis 400 UpM gerührt und es wird mit ca. 10 l/h Stickstoff gespült, um den Sauerstoff aus der Lösung zu verdrängen. Diese Stickstoffspülung wird während der gesamten Reaktionszeit beibehalten. Der Restsauerstoffgehalt beim Start der Polymerisation liegt vorteilhaft zwischen 1,2 und 1,8 ppm. Der pH-Wert des Reaktionsgemisches liegt bei etwa 2,1. Das Reaktionsgemisch wird auf 35 °C erwärmt.

Nach einer 20-minütigen Stickstoffspülung mit ca. 10 l/h wird die Polymerisationsreaktion durch die Zugabe von 0,75 g $K_2S_2O_8$ = 0,5 % (alle Initiatormengen sind bezogen auf die Monomereinwaage) gestartet. Nach 1 Stunde werden weitere 0,75 g $K_2S_2O_8$ = 0,5 %, bezogen auf die Monomereinwaage, zugegeben. Nach 2 Stunden werden 1,5 g $K_2S_2O_8$ = 1 % zugegeben. 4 Stunden nach dem Reaktionsstart wird das Reaktionsgemisch gering viskos und es werden weitere 1,5 g $K_2S_2O_8$ = 1 % zugegeben. Nach 6 Stunden ist die Reaktion beendet und es werden 11,19 g einer 50 %ige Natronlauge zugegeben, um den pH-Wert von 1,9 auf 6,2 anzuheben.

Das erhaltene Endprodukt ist durch folgende Angaben charakterisiert :

| | |
|---|---|
| pH-Wert | 6,4 |
| Konzentration | 24 Gew.-% |
| Viskosität ($VT_{24}$ Haake) | 100 mPa · s bei 25 °C |
| Grenzviskosität(⊕) | 0,32 g · $dl^{-1}$ |
| (gemessen an einer 1 % NaCl-Lösung bei 25 °C) | |

Die Polymerisate 2 bis 33, deren Zusammensetzung Tabelle 1 zu entnehmen ist, können analog zu Beispiel 1 hergestellt werden.

### Beispiel 34

In einem 1 l-Polymerisationskolben mit Rührer, Rückflußkühler und Gaseinleitrohr für Inertgas werden 324,3 g entionisiertes Wasser vorgelegt. Danach werden 34,9 g Ethylacrylat zugegeben. Diese Menge entspricht 0,3405 mol Ethylacrylat.

Anschließend werden

142,15 g einer 30 %ige wäßrige Acrylamidlösung = 0,600 Mol und
37,8 g 1-Vinylpyrrolidon-2 = 0,3405 mol und
18,69 g Acrylsäure = 0,2594 Mol und
33,57 g einer 50 %ige Lösung von 2-Acrylamido-2-methyl-propan natriumsulfonat (AMPS) = 0,0811 mol

zugegeben.

Diese Monomereinsatzmengen entsprechen einer Zusammensetzung von

21 mol-% Ethylacrylat,
37 mol-% Acrylamid,
21 mol-% 1-Vinylpyrrolidon-2,
16 mol-% Acrylsäure und
5 mol-% AMPS.

Als Kettenlängenregler wird Hydrochinon in einer Menge von 6 g einer 1 %iger Lösung = 0,04 %, bezogen auf die Gesamtmonomereinwaage, eingesetzt. Um eine bessere Verteilung der nicht wasserlöslichen Monomeren zu erreichen, wird eine Lösung des Tensids Genapol in einer Menge von 3,41 g einer 1 %ige Lösung = 0,1 % auf die Ethylacrylateinwaage zugegeben.

Nach dem Ende der Zugaben wird mit einer Geschwindigkeit von 350 bis 400 UpM gerührt und es wird mit ca. 10 l/h Stickstoff gespült, um den Sauerstoff aus der Lösung zu verdrängen. Diese Stickstoffspülung wird während der gesamten Reaktionszeit beibehalten. Der Restsauerstoffgehalt beim Start der Polymerisation liegt vorteilhaft zwischen 1,2 und 1,8 ppm. Der pH-Wert des Reaktionsgemisches liegt bei etwa 2,8. Das Reaktionsgemisch wird auf 35 °C erwärmt.

Nach einer 20-minütigen Stickstoffspülung mit ca. 10 l/h wird die Polymerisationsreaktion durch die Zugabe von 0,75 g $K_2S_2O_8$ = 0,5 % (alle Initiatormengen sind bezogen auf die Monomereinwaage) gestartet. Nach 1 Stunde werden weitere 0,75 g $K_2S_2O_8$ = 0,5 %, bezogen auf die Monomereinwaage, zugegeben. 4 Stunden nach dem Reaktionsstart wird das Reaktionsgemisch gering viskos und es werden weitere 1,5 g $K_2S_2O_8$ = 1 % zugegeben. Nach 6 Stunden ist die Reaktion beendet.

Das erhaltene Zwischenprodukt ist durch folgende Angaben charakterisiert :

| | |
|---|---|
| pH-Wert | 2,6 |
| Konzentration | 24 Gew.-% |
| Viskosität ($VT_{24}$ Haake) | 200 mPa · s bei 25 °C |

Im Anschluß an die Polymerisation wird die Umsetzung des Polymerisats mit Formaldehyd und Natriumhydrogensulfit durchgeführt.

Hierzu wird die Polymerlösung bei 20 °C mit 15,31 g einer 50 %iger Natronlauge und 12,17 g 25 %ige Natronlauge auf einen pH-Wert von 8,9 eingestellt.

Danach werden 20,66 ml einer 40 %igen Formaldehydlösung zugegeben und es wird unter ständigem Rühren auf 50 °C aufgeheizt. Die Temperatur von 50 °C wird 2 Stunden lang beibehalten.

Nun erfolgt eine Zugabe von 31,22 g $NaHSO_3$ und es wird auf 60 °C Temperatur aufgeheizt.

Nach 1 Stunde bei 60 °C ist die Reaktion beendet.

Die erhaltene Lösung kann direkt eingesetzt werden. Die Polymerisate 35 bis 40, deren Zusammensetzung Tabelle 1 zu entnehmen ist, können analog zu Beispiel 34 hergestellt werden.

In der Tabelle I werden folgende Abkürzungen verwendet :

| | |
|---|---|
| AMPS | : 2-Acrylamido-2-methylpropansulfonsäurenatrium-salz |
| NVPY | : 1-Vinylpyrrolidon-2 |
| AAM | : Acrylamid |
| EA | : Ethylacrylat |
| IBA | : Isobutylacrylat |
| TBA | : Tertiärbutylacrylat |
| HEA | : Hydroxyethylacrylat |
| HPA | : Hydroxypropylacrylat |
| VAC | : Vinylacetat |
| VMACAM | : N-Vinyl-N-methylacetamid |
| NAVS | : Natriumvinylsulfonat |
| NASS | : Natriumstyrolsulfonat |
| AS | : Acrylsäure |
| MAS | : Methacrylsäure |
| MA | : Methacrylat |
| HPMA | : Hydroxypropylmethacrylat |
| HEMA | : Hydroxyethylmethacrylat |
| VCLT | : Vinylcaprolactam |

(Siehe Tabelle 1 Seite 7 ff.)

Tabelle 1

| Beispiel Nr. | mol% | Mon.1 | mol% | Mon.2 | mol% | Mon.3 | mol% | Mon.4 | mol% | Mon.5 | mol% | Mon.6 | Viskosität |
|---|---|---|---|---|---|---|---|---|---|---|---|---|---|
| 1 | 15 | EA | 7 | VAC | 36 | AAM | 24 | NVPY | 8 | AS | 10 | AMPS | 100 |
| 2 | 40 | EA | | | 32 | AAM | 10 | NVPY | 8 | AS | 10 | AMPS | 300 |
| 3 | 15 | EA | 7 | VAC | 30 | AAM | 30 | NVPY | 8 | AS | 10 | AMPS | 100 |
| 4 | 15 | EA | 7 | VAC | 30 | AAM | 20 | NVPY | 8 | AS | 20 | AMPS | 200 |
| 5 | 15 | EA | 7 | VAC | 28 | AAM | 20 | NVPY | 20 | AS | 10 | AMPS | 300 |
| 6 | 15 | EA | 7 | VAC | 24 | AAM | 16 | NVPY | 8 | AS | 30 | AMPS | 200 |
| 7 | 15 | EA | 7 | VAC | 16 | AAM | 24 | NVPY | 8 | AS | 30 | AMPS | 100 |
| 8 | 40 | EA | | | 20 | AAM | 10 | NVPY | 8 | AS | 22 | AMPS | 300 |
| 9 | 15 | EA | 7 | VAC | 43 | AAM | 10 | VMACAM | 8 | AS | 17 | AMPS | 1.400 |
| 10 | 15 | EA | 7 | VAC | 36 | AAM | 24 | VMACAM | 8 | AS | 10 | AMPS | 300 |
| 11 | 15 | HPA | 7 | VAC | 36 | AAM | 24 | NVPY | 8 | AS | 10 | AMPS | 200 |
| 12 | 15 | EA | 7 | VAC | 36 | AAM | 24 | NVPY | 8 | MAS | 10 | AMPS | 200 |
| 13 | 30 | EA | | | 32 | AAM | 20 | NVPY | 8 | AS | 10 | AMPS | 300 |
| 14 | 10 | EA | 5 | VAC | 47 | AAM | 20 | NVPY | 8 | AS | 10 | AMPS | 200 |
| 15 | 15 | EA | 7 | VAC | 50 | AAM | 10 | NVPY | 8 | AS | 10 | AMPS | 400 |
| 16 | 15 | EA | 7 | VAC | 18 | AAM | 12 | NVPY | 8 | AS | 40 | AMPS | 200 |
| 17 | 15 | EA | 7 | VAC | 50 | AAM | 10 | NVPY | 8 | AS | 10 | AMPS | 400 |
| 18 | | | 22 | EA | 36 | AAM | 21 | NVPY | 4 | AS | 17 | AMPS | 200 |
| 20 | 15 | MA | 7 | VAC | 36 | AAM | 24 | NVPY | 8 | AS | 10 | AMPS | 100 |
| 21 | 15 | HEMA | 7 | VAC | 36 | AAM | 24 | NVPY | 8 | AS | 10 | AMPS | 300 |
| 22 | 15 | HPMA | 7 | VAC | 36 | AAM | 24 | NVPY | 8 | AS | 10 | AMPS | 200 |
| 23 | 15 | HEA | 7 | VAC | 36 | AAM | 24 | NVPY | 8 | AS | 10 | AMPS | 200 |
| 24 | 15 | EA | 7 | VAC | 36 | AAM | 24 | NVPY | 8 | AS | 10 | AMPS | 900 |

Tabelle 1 (Fortsetzung)

| Beispiel Nr. | mol% | Mon.1 | mol% | Mon.2 | mol% | Mon.3 | mol% | Mon.4 | mol% | Mon.5 | mol% | Mon.6 | Viskosität |
|---|---|---|---|---|---|---|---|---|---|---|---|---|---|
| 25 | 11 | EA | 11 | VPP | 36 | AAM | 24 | NVPY | 8 | AS | 10 | AMPS | 200 |
| 26 | 15 | EA | 7 | VPP | 36 | AAM | 24 | NVPY | 8 | AS | 10 | AMPS | 200 |
| 27 | 7 | HEA | | | 44 | AAM | 17 | NVPY | 11 | AS | 17 | AMPS | 500 |
| 28 | 20 | VPP | 7 | VAC | 27 | AAM | 17 | NVPY | 19 | AS | 10 | AMPS | 200 |
| 29 | 8 | HEA | 23 | TBA | 26 | AAM | 15 | NVPY | 19 | AS | 9 | AMPS | 400 |
| 30 | | | 10 | TBA | 36 | AAM | 21 | NVPY | 23 | AS | 10 | NAVS | 200 |
| 31 | | | 17 | EA | 36 | AAM | 21 | NVPY | 21 | AS | 5 | AMPS | 700 |
| 32 | 11 | EA | 11 | VAC | 36 | AAM | 21 | NVPY | 11 | AS | 10 | AMPS | 200 |
| 33 | | | 15 | IBA | 36 | AAM | 21 | NVPY | 18 | AS | 10 | NAVS | 4.000 |
| 34 | 21 | EA | | VAC | 37 | AAM | 21 | NVPY | 16 | AS | 5 | AMPS | 200 |
| 35 | 21 | EA | | | 27 | AAM | 21 | NVPY | 11 | AS | 20 | AMPS | 100 |
| 36 | 15 | EA | 7 | VAC | 24 | AAM | 16 | NVPY | 8 | AS | 30 | AMPS | 200 |
| 37 | 15 | EA | 7 | VAC | 28. | AAM | 20 | NVPY | 20 | AS | 10 | AMPS | 300 |
| 38 | 40 | EA | | | 32 | AAM | 10 | NVPY | 8 | AS | 10 | AMPS | 300 |
| 39 | 15 | EA | 7 | VAC | 30 | AAM | 300 | NVPY | 8 | AS | 10 | AMPS | 100 |
| 40 | 30 | EA | | | 32 | AAM | 20 | NVPY | 8 | AS | 10 | AMPS | 300 |

In den nachfolgenden Anwendungsbeispielen werden die erfindungsgemäßen Polymerisate mit bekannten Verfließmitteln für Baustoffgemische verglichen. Bei dieser Anwendung ist besonders wichtig, daß das Verfließmittel zu einem möglichst ausgedehnten Verteilen der Fließestrichmasse in dem betreffenden Raum führt.

Zur Messung dieses Verfließeffektes wird in anwendungstechnischen Tests das sogenannte Ausbreitmaß unter standardisierten Bedingungen verwendet. Außerdem ist es besonders wichtig, daß die Fließestrichmischung auch nach 1 Stunde noch ihre volle Wirksamkeit beibehält. Aus diesem Grund wird das Ausbreitmaß nach 1 Stunden nochmals ermittelt. Das Ausbreitmaß nach 1 Stunde sollte im Idealfall genau so groß sein wie das Ausbreitmaß sofort nach dem Ansetzen der Fließestrichmischung. Um einen zügigen Baufortschritt zu gewährleisten, muß der Fließestrich nach 16 Stunden (d. h. am Morgen des nächsten Arbeitstages) begehbar sein. Aus diesem Grund wird beim Labortest für die Fließestrichanwendung die Aushärtung nach 16 Stunden überprüft.

Der Fließestrichtest wird folgendermaßen durchgeführt :

Es wird folgende Rezeptur eingesetzt :

175 g Zement PZ 35
175 g Flugasche
725 g Sand mit einer Körnung von 0 bis 2 mm

insgesamt 1.075 g Feststoff

Die Zusatzmengen an Verfließmitteln (Polymerisaten) und Entschäumer werden auf diese Feststoffmenge von 1.075 g bezogen.

Es werden bei allen Anwendungsbeispielen folgende Zusätze verwendet :

0,2 % Verfließmittel (100 %ig),
bezogen auf die Grundrezepturmenge
0,1 % Entschäumer SB 2030 S,
bezogen auf die Grundrezepturmenge

Die Wassermenge richtet sich nach der Fließfähigkeit des Estrichs. Man geht von 105 ml Anfangsgesamtwassermenge aus und dosiert je nach Bedarf zu. In dieser Anfangsgesamtwassermenge ist das Wasser enthalten, daß das Polymerisat mit seiner Lösung mitbringt.

Durchführung des Tests

Der Sand, der Zement und die Flugasche werden in einem Labormischer 2 min trocken gemischt. Die Polymerlösung, der Entschäumer und das Wasser werden in ein Becherglas eingewogen, verrührt und danach in die homogene Trockenmischung aus Sand, Zement und Flugasche gegeben, wobei die Trockenmischung gerührt wird.

Nach 2 min wird der Mischvorgang unterbrochen und man beurteilt die Probe danach, ob die Oberfläche innerhalb von 15 bis 30 sec völlig glatt verfließt. Falls diese Eigenschaft noch nicht erreicht ist, wird Wasser in einer Abstufung von 5 ml zugegeben und anschließend wird diese Wassermenge 1 min verrührt. Danach wird der Rührvorgang wieder unterbrochen und es wird wieder beurteilt, ob die Oberfläche innerhalb von 15 bis 30 sec ganz glatt verfließt. Kurz vor dem Erreichen dieses völlig glatten Verfließens wird das Wasser nur noch in Schritten von 1 ml zugegeben.

Die Wassermenge, die benötigt wird, um ein völlig glattes Verfließen zu erreichen, sollte möglichst gering sein, um eine Rißbildung im Estrich zu vermeiden.

Nach dem Erreichen eines völlig glatten Verfließens wird das Ausbreitmaß bestimmt. Bis zu diesem Zeitpunkt muß der Estrich insgesamt 10 min gerührt worden sein. Im Anschluß erfolgt die Bestimmung des Ausbreitmaßes.

Bestimmung des Ausbreitmaßes

Ein Kunststoffzylinder mit einem Durchmesser von 7 cm und einer Höhe von 8,5 cm, der in der Mitte einer Kunststoffschale mit einem Durchmesser von 32 cm steht, wird mit dem Fließestrich vollgefüllt. Danach wird der Kunststoffzylinder angehoben, so daß der Fließestrich auseinanderfließen kann. Nach 3 min wird durch mehrere Messungen der durchschnittliche Durchmesser des ausgebreiteten Fließestrichfladens bestimmt. Dieses Maß gibt das Ausbreitmaß an. Beim Verfließen des Estrichs wird auch gleichzeitig dessen Oberfläche beurteilt, die möglichst glatt sein sollte. Das Verfließen des Estrichs sollte auch möglichst zu einer runden Form führen.

Nach Bestimmung des Ausbreitmaßes wird die gesamte Estrichmasse in einen Polystyrolbecher gefüllt und 1 Stunde lang stehengelassen. Nach dieser Zeit, die von der Zugabe der Polymerlösung zur Trockenmischung an gerechnet wird, wird die Oberfläche des Estrichs auf eine evtl. Hautbildung geprüft. Anschließend wird der Estrich gut durchgerührt, wobei man beurteilt, ob der Estrich schon weitgehend abgebunden ist. Der Estrich sollte durch Rühren wieder gut fließfähig zu machen sein.

Im Anschluß bestimmt man wieder, wie oben beschrieben, das Ausbreitmaß und beurteilt die Oberfläche.

Zum Abschluß wird eine Probe von 100 g Estrich in einen Polystyrolbecher gefüllt und diese Probe läßt man 16 Stunden aushärten.

Prüfung der Aushärtung

Die Aushärtung der Probe wird geprüft, indem man mit dem Finger fest auf die Oberfläche drückt. Gibt die Oberfläche des Estrichs nach, so ist er nicht begehbar. Dies ist ein grober Vortest.

Zusätzlich wird die Aushärtung mit einem Nadelgerät nach Vickert überprüft. Hierbei wird untersucht, ob eine Metallnadel mit einem Durchmesser von ca. 1 mm, die mit einem Gewicht von 300 g belastet ist, in die Probe eindringt. Es werden 10 Messungen durchgeführt und aus diesen Messungen wird der Mittelwert der Eindringtiefe bestimmt. Der Estrich wird dann als ausgehärtet betrachtet, wenn die Nadel bei keiner der 10 Messungen in den Estrich eindringen konnte.

Für die Untersuchungen wurden folgende Proben eingesetzt :

A. Mischpolymerisat (erfindungsgemäß), bestehend aus 15 mol-% Ethylacrylat, 7 mol-% Vinylacetat, 36 mol-% Acrylamid, 24 mol-% 1-Vinylpyrrolidon-2, 8 mol-% Acrylsäure und 10 mol-% AMPS (Beispiel 1, Tabelle 1).

B. Modifiziertes Mischpolymerisat (erfindungsgemäß), hergestellt in der Zusammensetzung 21 mol-% Ethylacrylat, 37 mol-% Acrylamid, 21 mol-% 1-Vinylpyrrolidon-2, 16 mol-% Acrylsäure und 5 mol-% AMPS. Dieses Polymerisat wurde nach der Polymerisation noch mit Formaldehyd und Natriumhydrogensulfit umgesetzt (Beispiel 34, Tabelle 1).

C. Handelsübliches Melamin-Formaldehyd-Kondensationsprodukt für den Einsatz als Betonverflüssiger vorgesehen (Vergleichsprodukt).

In der Tabelle 2 sind die Ergebnisse der Untersuchungen mit diesen Produkten und mit den Verfließmitteln gemäß Beispiel Nr. 2, 3, 5, 9, 11, 15, 16 und 22 zusammengestellt :

(Siehe Tabelle 2 Seite 11 f.)

Tabelle 2

| Verfließ-mittel | Wasserverbrauch in ml | Ausbreitmaß unmittelbar nach dem Ansetzen des Estrichs in ml | Ausbreitmaß 1 h nach der Zugabe des Verfließmittels in ml | Bemerkungen zum Verfließen nach 1 h | Aushärtung ermittelt nach Vickert |
|---|---|---|---|---|---|
| A | 129 | 250 | 265 | durch Rühren leicht zu verflüssigen; fließt glatt ohne Sedimentation | ausgehärtet |
| B | 123 | 245 | 230 | durch Rühren leicht zu verflüssigen; fließt glatt ohne Sedimentation | ausgehärtet |
| C | 140 | 165 | 165 | nicht fließfähig, unebene Oberfläche, starke Wölbung des Estrichfladens | ausgehärtet |
| Bsp. 2 | 128 | 250 | 230 | durch Rühren leicht zu verflüssigen; fließt glatt ohne Sedimentation | ausgehärtet |
| Bsp. 3 | 128 | 240 | 225 | " | " |
| Bsp. 5 | 125 | 265 | 225 | " | " |
| Bsp. 9 | 131 | 245 | 210 | " | " |
| Bsp. 11 | 126 | 250 | 240 | " | " |
| Bsp. 15 | 124 | 260 | 255 | " | " |
| Bsp. 16 | 112 | 255 | 230 | " | " |
| Bsp. 22 | 129 | 190 | 210 | " | " |

Die Ergebnisse der anwendungstechnischen Untersuchungen zeigen eindeutig die überlegene Wirksamkeit der erfindungsgemäßen Verfließmittel gegenüber dem Vergleichsprodukt C.

Mit den erfingungsgemäßen Produkten werden sehr viel höhere Ausbreitmaße unmittelbar nach dem Ansetzen des Estrichs erreicht als mit dem Vergleichsprodukt C. Die erfindungsgemäßen Produkte verfließen vorteilhafterweise völlig glatt, ohne Sedimentation, während das Vergleichsprodukt C auch mit der höheren Wassermenge nur zu einem unebenen Verfließen des Estrichfladens führt, der zudem noch eine Wölbung aufweist.

Besonders deutlich wird die Überlegenheit der erfindungsgemäßen Produkte bei der Bestimmung des Ausbreitmaßes 1 Stunde nach der Zugabe des Verfließmittels.

Hier weisen beide erfindungsgemäßen Produkte noch das unwesentlich veränderte hohe anfängliche Ausbreitmaß auf und bewirken ein völlig glattes Verfließen des Estrichs ohne Sedimentation.

Das Vergleichsprodukt C hingegen ist nicht fließfähig und führt zu einem Estrichfladen mit unebener Oberfläche und einer starken Wölbung.

Die erfindungsgemäßen Produkte erreichen also eine weitaus höhere Wirksamkeit als die bisher bekannten Produkte und stellen somit eine wesentliche Verbesserung des Standes der Technik dar.

**Patentansprüche**

1. Wasserlösliche Copolymerisate, die zu

1) 5 bis 50 mol-% aus Resten der Formel I

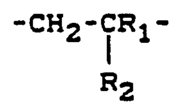

2) 0 bis 20 mol-% Resten der Formel II

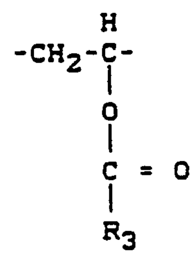

3) 5 bis 50 mol-% Resten der Formel III

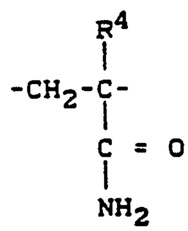

4) 5 bis 50 mol-% Resten der Formel IVa oder IVb

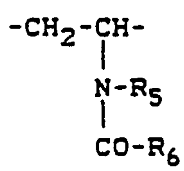 (IVa)

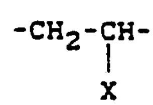 (IVb)

5) 2 bis 50 mol-% Resten der Formel V

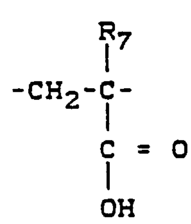

6) 5 bis 50 mol-% Resten der Formel VI

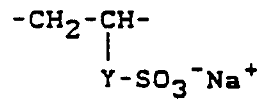

bestehen, wobei in den Resten I bis VI

$R_1$ Wasserstoff oder eine Methylgruppe,

$R_2$ eine Alkoxycarbonylgruppe mit 1 bis 4 C-Atomen in der Alkoxygruppe, vorzugsweise eine Ethyloxy-, eine Isobutyloxy- oder tert.Butyloxycarbonylgruppe, eine Alkanoyloxygruppe mit 1 bis 4 C-Atomen oder eine β-Hydroxyalkoxycarbonyl mit 2 oder 3 C-Atomen,

$R_3$ eine Methyl- oder eine Ethylgruppe,

$R_4$ Wasserstoff oder eine Methylgruppe,

$R_5$ und $R_6$ gleich oder verschieden, Wasserstoff, eine Methyl- oder Ethylgruppe oder gemeinsam einen Trimethylen- oder Pentamethylenring bilden,

$R_7$ Wasserstoff oder eine Methylgruppe,

Y eine kovalente Bindung oder eine Gruppe der Formel

$—CO—NH—C(CH_3)_2—CH_2—$,

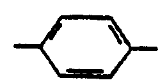

und

X ein Imidazol- oder Carbazolrest bedeuten und wobei die Summe aus 1) bis 6) immer 100 mol-% ergeben muß.

2. Wasserlösliche Copolymerisate nach Anspruch 1, dadurch gekennzeichnet, daß sie aus

1) 10 bis 40 mol-% Resten der Formel I
2) 0 bis 15 mol-% Resten der Formel II
3) 20 bis 50 mol-% Resten der Formel III
4) 10 bis 40 mol-% Resten der Formel IVa oder IVb
5) 5 bis 30 mol-% Resten der Formel V
6) 5 bis 30 mol-% Resten der Formel VI

bestehen.

3. Wasserlösliche Copolymerisate nach Anspruch 1 oder 2, dadurch gekennzeichnet, daß sie sich von Ethylacrylaten, Vinylacetat, Acrylamid, 1-Vinyl-2-pyrrolidon, Acrylsäure und 2-Acrylamido-2-methylpropansulfonsäure ableiten und gegebenenfalls mit Formaldehyd und Na-bisulfit umgesetzt sind.

4. Baustoffmischungen, insbesondere Estrichmischungen, auf Basis Zement, Sand und Flugasche, dadurch gekennzeichnet, daß sie als Verfließhilfsmittel die Copolymerisate nach Ansprüchen 1 oder 3 enthalten.

5. Baustoffmischungen nach Anspruch 4, dadurch gekennzeichnet, daß sie das Verfließhilfsmittel in Mengen von 0,05-1 Gew.-%, bezogen auf Feststoffe, enthalten.

6. Baustoffmischungen nach Ansprüchen 4-5, dadurch gekennzeichnet, daß sie das Verfließhilfsmittel in Mengen von 0,15-0,4 Gew.-% enthalten.

## Claims

1. Water-soluble copolymers consisting of

1) 5 to 50 mol % of radicals of the formula I

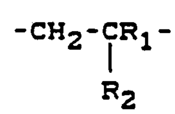

2) 0 to 20 mol % of radicals of the formula II

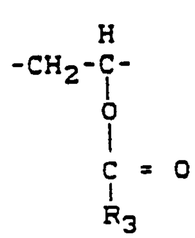

3) 5 to 50 mol % of radicals of the formula III

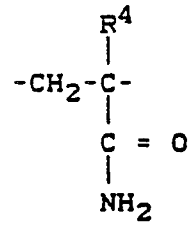

4) 5 to 50 mol % of radicals of the formula IVa or IVb

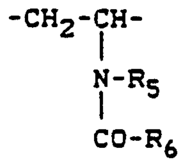 (IVa)

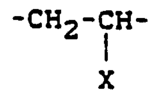 (IVb)

5) 2 to 50 mol % of radicals of the formula V

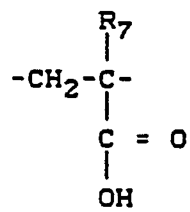

6) 5 to 50 mol % of radicals of the formula VI

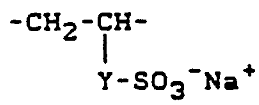

wherein, in the radicals I to VI,

$R_1$ denotes hydrogen or a methyl group,

$R_2$ denotes an alkoxycarbonyl group with 1 to 4 C atoms in the alkoxy group, preferably an ethyloxy-, isobutyloxy- or tert.-butyloxycarbonyl group, an alkanoyloxy group with 1 to 4 C atoms or a β-hydroxyalkoxycarbonyl group with 2 or 3 C atoms,

$R_3$ denotes a methyl or an ethyl group,

$R_4$ denotes hydrogen or a methyl group,

$R_5$ and $R_6$ are identical or different and denote hydrogen, or a methyl or ethyl group, or together form a trimethylene or pentamethylene ring,

$R_7$ denotes hydrogen or a methyl group,

Y denotes a covalent bond or a group of the formula

$-CO-NH-C(CH_3)_2-CH_2-$ or

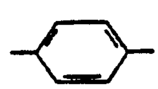

and

X denotes an imidazole or carbazole radical, and wherein the sum of 1) to 6) must always be 100 mol %.

2. Water-soluble copolymers according to Claim 1, characterized in that they consist of

1) 10 to 40 mol % of radicals of the formula I,
2) 0 to 15 mol % of radicals of the formula II,
3) 20 to 50 mol % of radicals of the formula III,
4) 10 to 40 mol % of radicals of the formula IVa or IVb,
5) 5 to 30 mol % of radicals of the formula V and
6) 5 to 30 mol % of radicals of the formula VI.

3. Water-soluble copolymers according to Claim 1 or 2, characterized in that they are derived from ethyl acrylates, vinyl acetate, acrylamide, 1-vinyl-2-pyrrolidone, acrylic acid and 2-acrylamido-2-methylpropanesulphonic acid and have optionally been reacted with formaldehyde and Na-bisulphite.

4. Building material mixtures, in particular screed mixtures, based on cement, sand and fly ash, characterized in that they contain the copolymers according to Claim 1 or 3 as flow control auxiliaries.

5. Building material mixtures according to Claim 4, characterized in that they contain the flow control auxiliary in amounts of 0.05 to 1 % by weight, based on the solids.

6. Building material mixtures according to Claims 4-5, characterized in that they contain the flow control auxiliary in amounts of 0.15-0.4 % by weight.

**Revendications**

1. Copolymères solubles dans l'eau, qui consistent en

1) 5 à 50 moles % de restes de formule I

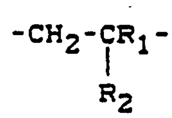

2) 0 à 20 moles % de restes de formule II

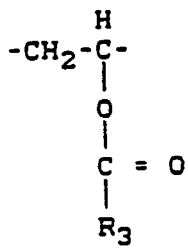

3) 5 à 50 moles % de restes de formule III

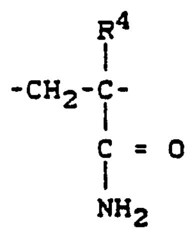

4) 5 à 50 moles % de restes de formule IVa ou IVb

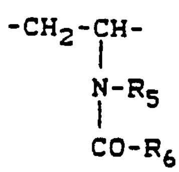 (IVa) 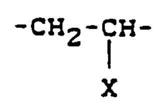 (IVb)

5) 2 à 50 moles % de restes de formule V

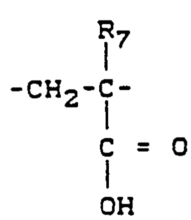

6) 5 à 50 moles % de restes de formule VI

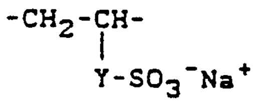

restes I à VI dans lesquels

$R_1$ représente un atome d'hydrogène ou un groupe méthyle,

$R_2$ représente un groupe alcoxycarbonyle ayant 1 à 4 atomes de carbone dans le groupe alcoxy, de préférence un groupe éthoxy-, isobutoxy- ou terbutoxy-carbonyle, un groupe alcanoyloxy en $C_1$-$C_4$ ou un groupe β-hydroxyalcoxycarbonyle en $C_2$ ou $C_3$,

$R_3$ représente un groupe méthyle ou éthyle,

$R_4$ représente un atome d'hydrogène ou un groupe méthyle,

$R_5$ et $R_6$ sont identiques ou différents et représentent chacun un atome d'hydrogène ou un groupe méthyle ou éthyle ou forment ensemble un noyau triméthylène ou pentaméthylène,

$R_7$ représente un atome d'hydrogène ou un groupe méthyle,

Y représente une liaison covalente ou un groupe de formule

$—CO—NH—C(CH_3)_2—CH_2—$ ou

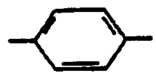

et

X représente un reste imidazolyle ou carbazolyle, et la somme de 1) à 6) devant toujours donner 100 moles %.

2. Copolymères solubles dans l'eau selon la revendication 1, caractérisés en ce qu'ils consistent en

1) 10 à 40 moles-% de restes de formule I
2) 0 à 15 moles-% de restes de formule II
3) 20 à 50 moles-% de restes de formule III
4) 10 à 40 moles-% de restes de formule IVa ou IVb
5) 5 à 30 moles-% de restes de formule V
6) 5 à 30 moles-% de restes de formule VI

3. Copolymères solubles dans l'eau selon la revendication 1 ou 2, caractérisés en ce qu'ils dérivent de l'acrylate d'éthyle, de l'acétate de vinyle, de l'acrylamide, de la 1-vinyl-2-pyrrolidone, de l'acide acrylique et de l'acide 2-acrylamido-2-méthylpropanesulfonique et sont éventuellement mis à réagir avec le formaldéhyde et le bisulfite de Na.

4. Mélanges de matériaux de construction, en particulier mélanges pour dalles à base de ciment, de sable et de cendre volante, caractérisés en ce qu'ils contiennent comme auxiliaires fluidifiants les copolymères selon les revendications 1 ou 3.

5. Mélanges de matériaux de construction selon la revendication 4, caractérisés en ce qu'ils contiennent l'auxiliaire fluidifiant en quantités de 0,05-1 % en poids, par rapport aux solides.

6. Mélanges de matériaux de construction selon les revendications 4-5, caractérisés en ce qu'ils contiennent l'auxiliaire fluidifiant en quantités de 0,15-0,4 % en poids.